# EUROPÄISCHE PATENTANMELDUNG

(11) **EP 1 291 815 A2**
(43) Veröffentlichungstag der Anmeldung: **12.03.2003**
(21) Anmeldenummer: 02019059.1
(22) Anmeldetag: 27.08.2002
(51) Int. Cl.: G06K 19/04

(54) **Datenträger und Patientenkarte bestehend aus einem derartigen Datenträger**

(30) Priorität: 27.08.2001 DE 10140729; 01.02.2002 DE 10204050; 06.05.2002 DE 10220167
(71) Anmelder: Nehammer, Christian, Dr., 32105 Bad Salzuflen (DE)
(72) Erfinder: Nehammer, Christian, Dr., 32105 Bad Salzuflen (DE)
(74) Vertreter: Prüfer, Lutz H., Dipl.-Phys.

(57) **Zusammenfassung**

Es wird ein Datenträger zum Speichern und Verarbeiten von digitalen Daten bereitgestellt, der eine optische Speicherplatte (2, 3, 4) in Form einer Compact Disc oder einer DVD-Platte aufweist, auf deren Oberfläche (2a), die der datentragenden Oberfläche abgewandt ist, ein Mikroprozessor-Chip (11) vorgesehen ist, wobei die äußeren Abmessungen des Datenträgers derart sind, daß dieser sowohl in ein CD-Laufwerk bzw. ein DVD-Laufwerk eines Personal Computers und in ein Smart Card-Lesegerät einsetzbar ist. Hierzu entspricht die Position der Kontaktflächen des Mikroprozessor-Chips (11) der Position eine Kontaktfläche des Mikroprozessor-Chips einer entsprechenden Smart Card. Der Datenträger kann insbesondere als Patientenkarte verwendet werden, wobei die CD bzw. die DVD und der Mikroprozessor-Chip jeweils Basisdaten eines Patienten speichern. Durch Einlegen des Datenträgers in ein CD-Laufwerk bzw. ein DVD-Laufwerk wird über das Internet ein Kontakt zu einem Zentralrechner mit einer Patientenkartei hergestellt. Durch Einlegen des Datenträgers in ein Smart Card-Lesegerät wird über den Mikroprozessor-Chip ein Kontakt mit einer zentralen Patientenkartei hergestellt.

## Beschreibung

Die Erfindung betrifft einen Datenträger zum Speichern und Verarbeiten von digitalen Daten und eine Patientenkarte bestehend aus einem derartigen Datenträger.

Es sind zum einen Datenträger bekannt, die nur der Übertragung von Daten von einem Computer zu einem anderen dienen und zum anderen Datenträger, die der Übertragung und Prüfung von Kontrolldaten für den Zugang zu Computersystemen und Netzwerken dienen. Während erstere nur Daten speichern, sind letztere auch in der Lage, mathematische Algorithmen zu berechnen und dementsprechende Befehle auszuführen oder die Ausführung zu verweigern.

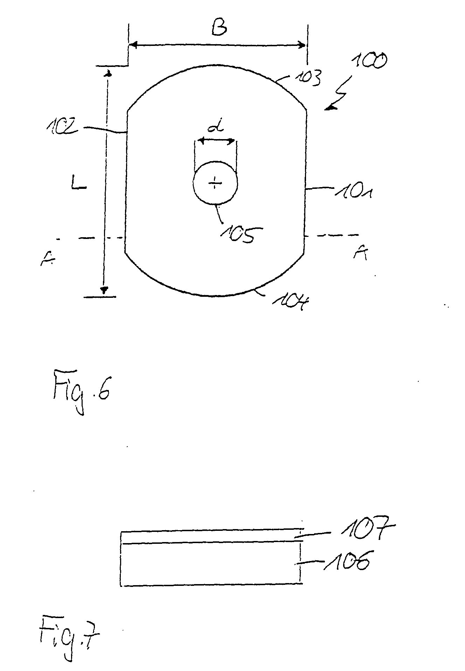

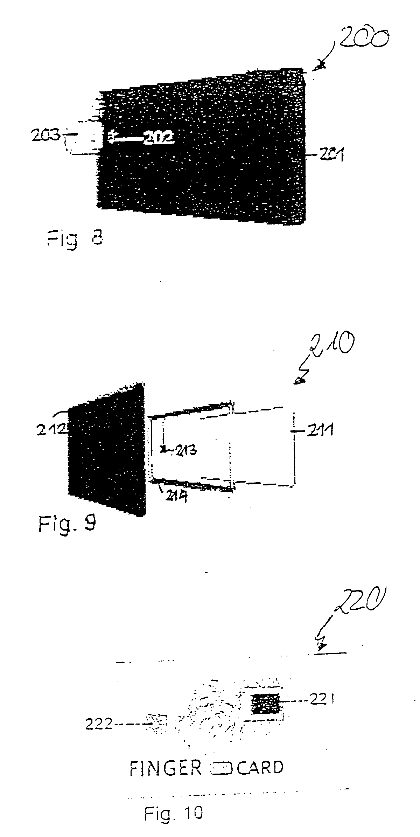

Ein bekannter Datenträger ist die sogenannte Mini Compact Disc, nachfolgend als Mini CD bezeichnet. Fig. 6 zeigt eine Draufsicht auf eine Mini CD und Fig. 7 einen in Dickenrichtung stark vergrößerten Schnitt entlang der Linie A-A in Fig. 6.

Die Mini CD ist wie die bekannte Compact Disc ein optoelektronischer Datenträger. Die in Fig. 6 dargestellte Mini CD 100 ist im Unterschied zu der bekannten kreisförmigen CD mit einem Durchmesser von 120 mm derart ausgebildet, daß sie zwei gegenüberliegende gerade Längsseiten 101, 102 und diese miteinander verbindende kreisbogenförmige Schmalseiten 103, 104 aufweist. Mittig weist die Mini CD eine zentrale Bohrung 105 mit kreisförmigem Querschnitt mit einem Durchmesser d auf, der so bemessen ist, daß in die Bohrung der Zentrierstift eines CDoder DVD-Abspielgerätes eingreifen kann. Der Durchmesser ist für die derzeit verwendeten Abspielgeräte 15 mm. Die Längsabmessung L der Mini CD beträgt 80 mm und die Abmessung in der Breite B beträgt 63 mm. Damit hat die Mini CD ein Format, welches dem Format einer üblichen Visitenkarte entspricht.

Wie aus der stark vergrößerten Schnittansicht gemäß Fig. 7 ersichtlich ist, ist die Mini CD im wesentlichen aus zwei Schichten aufgebaut, einer ersten unteren Schicht 106 aus transparentem Kunststoff und einer darauf auflaminierten dünnen Aluminiumfolie 107 von höchster Qualität. Gemäß der genormten Herstellung von Mini CDs beträgt die Dicke der transparenten Kunststoffschicht 0,8 mm und die Dicke der Aluminiumfolie 0,01 mm. Die der transparenten Kunststoffschicht 106 zugewandte Seite der Aluminiumfolie 107 trägt die in bekannter Weise mittels eines CD-Brenners eingebrannten bzw. geschriebenden Daten. Auf der der transparenten Schicht 106 abgewandten Seite der Aluminiumfolie ist eine in der Figur nicht dargestellte Kunststoffschutzschicht vorgesehen. Die Daten sind ausgehend von der inneren Bohrung 105 kreisförmig nach außen geschrieben. Dadurch ist es möglich, eine asymmetrische Form im Gegensatz zu den früher üblichen Schallplatten, bei denen die Daten von außen nach innen geschrieben worden sind, zu realisieren. Die einzige Notwendigkeit besteht darin, daß der maximale Durchmesser der Mini CD nicht größer ist als der Durchmesser von 80 mm einer inneren Vertiefung, wie sie heutige CD-Laufwerkschlitten aufweisen.

Die Speicherkapazität der Mini CD mit den beschriebenen Abmessungen beträgt ca. 50 MB. Es sind nurlesbare Mini CDs (CD-ROMs) und wiederbeschreibbare Mini CDs bekannt. Bei letzteren ist ein bis zu tausendmaliges Löschen und Wiederbeschreiben möglich.

Aufgrund der hohen Speicherkapazität wird die Mini CD bevorzugt für Werbeanwendungen einschließlich komplexer Bildfolgen, Videofilme und umfangreiche Textdokumente verwendet. Neben der enormen Speicherkapazität bestehen weitere Vorteile der Mini CD darin, daß sie praktisch überall lesbar ist, weil nahezu jeder Personal Computer heutzutage ein CD- bzw. DVD-Laufwerk aufweist. Für Personal Computer mit dem Betriebssystem Windows, welches weltweit verbreitet ist, besteht im Hinblick auf die Mini CD keine Notwendigkeit einer Treibersoftware, die vor dem Einlegen der Mini CD in den Computer geladen werden muß, da diese Software bereits vorhandener Bestandteil des Windows Betriebssystems ist. Ein weiterer Vorteil der Mini CD besteht in der weltweiten Interoperatibilität, da sie nach dem Einlegen - falls entsprechende Programme auf der Mini CD abgelegt sind - den Computer Host mit dem Internet verbinden kann. Durch diese Hosting Funktion ist der Anwender über die Mini CD und den Computer in der Lage, weltweite Kommunikation über das Internet zu installieren und durchzuführen.

Nachteile der Mini CD bestehen darin, daß diese ausschließlich ein Speichermedium ist und selbständig keine Rechenleistung vollbringen kann, d.h. nur im Zusammenwirken mit einem Computer Host, der die Mini CD abspielt, Programme ausgeführt werden können.

Eine zweite Art von Datenträger ist die sogenannte Smart Card. Unter diesem Betriff versteht man Plastikkarten, die an einer vorbestimmten Stelle einen Mikroprozessor-Chip aufweisen. Die Figuren 8 bis 10 zeigen schematisch Beispiele für verschiedene Smart Cards. Fig. 8 zeigt eine Smart Card 200 in Form einer Kontakt-Smart Card. Diese besteht aus einer im wesentlichen rechteckige Plastikkarte 201, in die an vorbestimmter Stelle ein Mikroprozessor-Chip 202 eingebettet ist, der über genau positionierte darüber befindliche und genormte Kontakte 203 mit einem entsprechenden Lesegerät für Smart Cards verbindbar ist, um auf dem Mikroprozessor-Chip vorprogrammierte Rechenoperationen auszuführen.

Heutige, auf dem Markt befindliche Smart Cards sind durch die ISO-Norm 7810 in allen physikalischen Eigenschaften definiert.

Fig. 9 zeigt ein weiteres Beispiel einer Smart Card 210 in Explosionsdarstellung, die als kontaktlose Smart Card bezeichnet wird. Diese besteht aus einem rückwärtigen Kartenkörper 211 und einem vorderseitigen Kartenkörper 212, die zwischen sich einen Mikroprozessor-Chip 213, der mit einer Antennenspule 214 verbunden ist, einschließen. Die Antenne 214 ist üblicherweise als einlaminierte Leiterbahn vorgesehen. Der Verbindungsaufbau zwischen dem Lesegerät und der Smart Card erfolgt in diesem Fall drahtlos über eine bestimmte Funkfrequenz. Wird die kontaktlose Smart Card in einen bestimmten Abstand, der beispielsweise maximal 5 Meter beträgt, an dem Lesegerät vorbeigeführt, so überträgt die Smart Card die auf dem Mikroprozessor-Chip gespeicherten Daten zu dem Lesegerät. Zur Steigerung der Leistung der Smart Card kann der Mikroprozessor-Chip nicht nur einen Hauptprozessor, sondern auch mathematische Co-Prozessoren enthalten. Über den Mikroprozessor-Chip können Daten, wie z.B. Zugangsberechtigungsdaten wie PIN-Nummern veroder entschlüsselt werden.

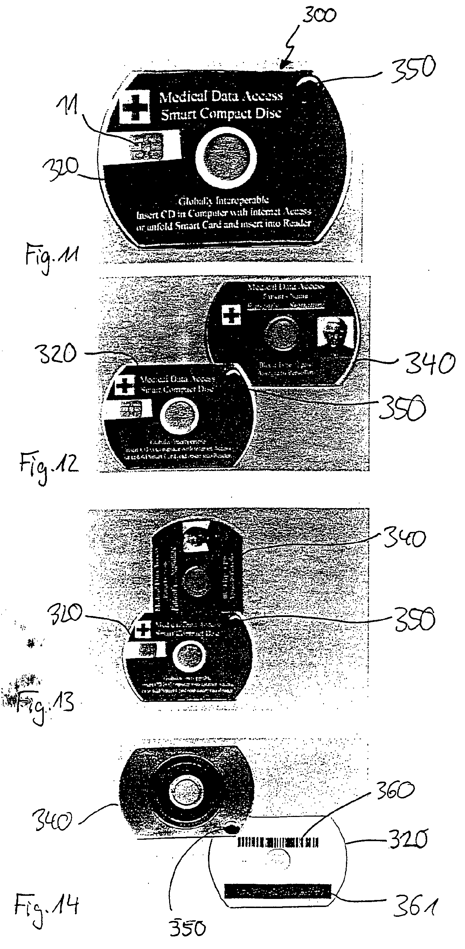

Fig. 10 zeigt eine weitere bekannte Ausführungsform einer Smart Card. Die Smart Card 220 ähnlich wie die Smart Card 200 gemäß Fig. 8 aufgebaut, weist aber zusätzlich einen Fingerabdrucksensor 221 auf, der auf der Oberfläche, auf der sich auch die Kontakte 222 für den Mikroprozessor befinden, einlaminiert ist. Anstelle des Eingebens einer Zugangsberechtigung z.B. in Form einer Geheimzahl erfaßt der Fingerabdrucksensor 221 den Fingerabdruck des Bedieners. Wenn der erfaßte Fingerabdruck mit einem auf dem Chip gespeicherten Fingerabdruck identisch ist, erhält das Smart Card Lesegerät die Information, daß der Anwender autorisiert ist, oder andernfalls, daß er nicht autorisiert ist.

Alternativ kann auch ein Fingerabdrucksensor an dem Smart Card Lesegerät selbst vorhanden sein.

Smart Cards sind wegen der Fähigkeit zur Ausführung auf komplexer cryptografischer Algorithmen geeignet für Zugangskontrollsysteme in Hochsicherheitsbereichen, bei denen die Verschlüsselung von Daten große Bedeutung hat. Der Anwendungsbereich von Smart Cards ist wegen dieser Fähigkeit zur Lösung hochkomplexer Aufgaben vielfältig. Smart Cards werden verwendet für Kreditkartensysteme, Zugangskontrollsysteme, Ausweisund Identitätskarten, Versicherungsausweise einschließlich Patientenkarten von Krankenversicherungen, Dauerkarten für öffentliche Verkehrsmittel und vieles mehr.

Der große Vorteil der Smart Cards im Gegensatz zu den zuvor beschriebenen Mini CDs besteht darin, daß die Smart Cards mit den Mikroprozessor-Chips komplexe Rechenaufgaben lösen können und deswegen die Möglichkeit beinhalten, die gespeicherten Informationen zu verschlüsseln. Ferner sind die Smart Cards für Fingerabdrucksensorsysteme bzw. "Kombicard"-Anwendungen, wie z.B. die kontaktlose Datenerfassung geeignet.

Nachteile der Smart Card sind neben dem im Vergleich zur Mini CD geringen Speichervolumen für Daten und die beschränkte Einsatzmöglichkeit. Zur Sichtbarmachung des auf der Smart Card gespeicherten Datensatzes bzw. zum Auslösen einer gewünschten Rechenaufgabe wird ein Smart Card Lesegerät samt Tastatur benötigt. Diese Lesegeräte sind zwar technisch verfügbar, aber bislang nicht in großen Stückzahlen flächendeckend eingeführt. Die Zahl der installierten Smart Card Lesegeräte im Verhältnis zu den CD-ROM-Laufwerken in Personal Computern mit dem Betriebssystem Windows ist vernachlässigbar. Ein weiterer Nachteil besteht darin, daß die Interoperabilität bzw. Netzwerkkompatibilität von Smart Cards gering ist. Ursprünglich wurden Smart Cards so konzipiert, daß sie mit bestimmten dezentralen Lesegeräten kommunizieren, beispielsweise einem Geldautomaten. Eine bestimmte Smart Card ist somit in der Regel nur für ein bestimmtes Netzwerk verwendbar, für welches sie entwickelt wurde. So ist beispielsweise eine Kreditkarte auf der Basis der Smart Card-Technologie nur in dem speziellen Informationssystem der Kreditkarten-Firma einsetzbar und kann auf dieses zugreifen, nicht aber gleichzeitig auf das Netzwerk eines Krankenhaussystems oder einer Mietwagen-Firma.

Bislang ist es den Herstellern von Smart Cards nicht gelungen, das Internet in großem Umfang als Kommunikationsnetzwerk zu verwenden. Der Notwendigkeit der Nutzbarmachung eines großen Kommunikationsnetzwerkes wie das Internet stand bisher bei der Anwendung von Smart Cards auch die Tatsache entgegen, daß diese vorwiegend dezentral an bestimmten Terminals eingesetzt werden, beispielsweise als Zugangskontrollsystem für Hochsicherheitsbereiche.

Aus der US 5,790,489 ist eine Compact Disc bekannt, die einen im Mittelbereich eingeklebten Mikroprozessor aufweist. Dieser bildet einen Mechanismus zum Kopierschutz.

Aus der US 2002/0006103 wird es als wünschenswert beschrieben, einen CD-Datenträger mit einem Mikroprozessorchip zu kombinieren, wobei aber die Position des Chips nicht definiert wird.

Aus der DE 200 07 767 U1 ist eine Kranken- bzw. Patientenkarte bekannt, bei der ebenfalls ein Mikroprozessorchip mit einer CD kombiniert wird, wobei die Position des Chips nicht definiert ist.

Es ist Aufgabe der Erfindung, einen Datenträger zum Speichern und Verarbeiten von digitalen Daten bereit zu stellen, der die Nachteile der oben beschriebenen Datenträger praktisch nicht aufweist und der universell einsetzbar ist und somit neue Einsatzmöglichkeiten eröffnet.

Die Aufgabe wird gelöst durch den Datenträger nach Patentanspruch 1 und die Patientenkarte nach Patentanspruch 14.

Weiterbildungen der Erfindung sind in den Unteransprüchen angegeben.

Mit der Erfindung kann der gesamte positive Anwendungsbereich sowohl der Smart Cards als auch der Mini CDs abgedeckt werden.

Weitere Merkmale und Zweckmäßigkeiten der Erfindung ergeben sich aus der Beschreibung von Ausführungsbeispielen anhand der Figuren. Von den Figuren zeigen:
- Fig. 1: eine Draufsicht auf einen Datenträger gemäß einer ersten Ausführungsform;
- Fig. 2: eine perspektivische Ansicht von schräg unten auf den Datenträger von Fig. 1;
- Fig. 3: einen Schnitt durch den Datenträger gemäß Fig. 1 entlang der Linie A-A von Fig. 1 in stark vergrößerter Darstellung;
- Fig. 4: eine Veranschaulichung der Abmessungen und Positionierung der Kontaktfläche für den Mikroprozessor-Chip für den Datenträger gemäß Fig. 1 gezeigt anhand der ISO-Norm für Smart Cards;
- Fig. 5: eine Draufsicht auf einen Datenträger gemäß einer weiteren Ausführungsform der Erfindung;
- Fig. 6: eine Draufsicht auf eine bekannte Mini CD;
- Fig. 7: einen Schnitt durch die Mini CD von Fig. 6 entlang der Linie A-A in stark vergrößerter Darstellung;
- Fig. 8: ein Beispiel einer bekannten Kontakt-Smart Card;
- Fig. 9: ein Beispiel für eine bekannte kontaktlose Smart Card;
- Fig. 10: ein weiteres Beispiel einer bekannten Smart Card; und
- Fig. 11: eine Draufsicht auf eine weitere Ausführungsform des erfindungsgemäßen Datenträgers;
- Fig. 12: eine Draufsicht auf den Datenträger nach Fig. 11 in auseinandergeschwenktem Zustand;
- Fig. 13: eine Draufsicht auf den Datenträger nach Fig. 11 in einem weiteren auseinandergeschwenktem Zustand; und
- Fig. 14: eine Ansicht von der Unterseite des erfindungsgemäßen Datenträgers nach der in Fig. 11 gezeigten Ausführungsform in auseinandergeschwenktem Zustand.

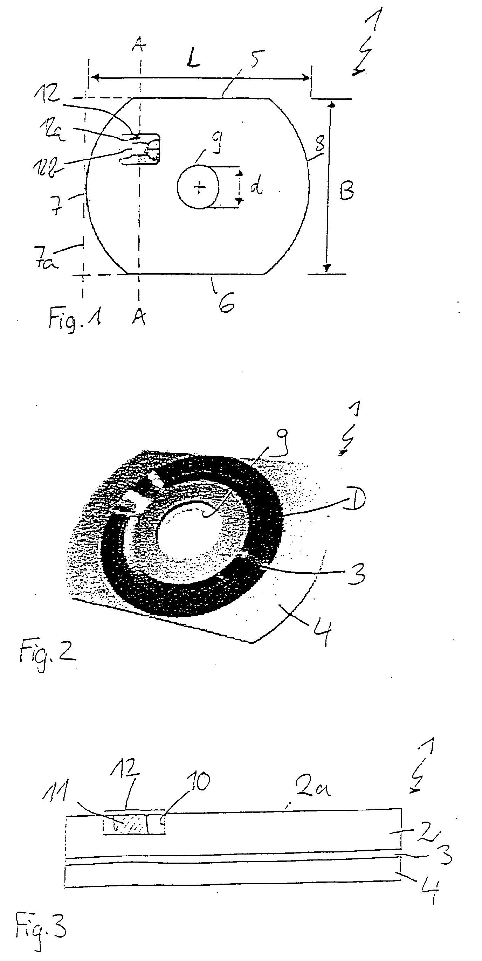

Der erfindungsgemäße Datenträger wird nun anhand von Figuren 1 bis 4 beschrieben.

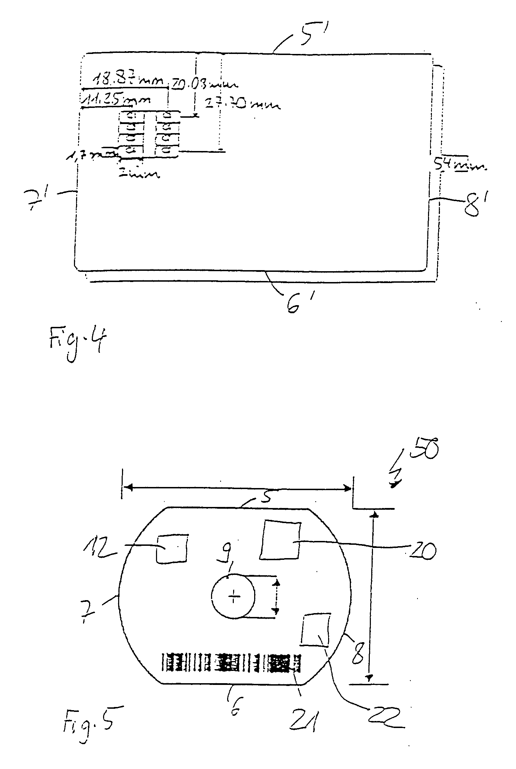

Der erfindungsgemäße Datenträger 1, der auch als Smart CD bezeichnet wird, ist, wie insbesondere aus Fig. 3 ersichtlich ist, schichtweise aufgebaut und weist eine erste Schicht 2 aus einem Kunststoff mit einer Schichtdicke von 0,6 mm auf, daran angrenzend zweite Schicht in Form einer Rekorderfolie 3, z.B. einer Aluminiumfolie, mit einer Dicke von 0,01 mm, und eine an diese angrenzende dritte Schicht in Form einer transparenten Kunststoffschicht 4 von 0,15 mm Dicke. Die der Rekorderfolie 3 zugewandte Seite der ersten Schicht 2 ist vollkommen eben. Die erste Schicht 2 ist mit der Kombination aus Rekorderfolie 3 und transparenter Schicht 4 durch Verkleben bzw. Laminieren verbunden.

Wie aus Fig. 1 und 2 ersichtlich ist, ist der Umriß des aus den Schichten 2, 3 und 4 gebildeten Datenträgers 1 ähnlich denen der in Fig. 6 gezeigten Mini CD. Der Datenträger weist zwei parallele Längsseiten 5, 6 und zwei diese jeweils kreisbogenförmig verbindende Schmalseiten 7, 8 auf.

Die Längsabmessung L des Datenträgers ist wie bei der oben beschriebenen Mini CD 80 mm, die Abmessung in der Breite ist jedoch im Unterschied zu der oben beschriebenen Mini CD nur 54 mm, was der Breite einer Smart Card nach ISO-Norm 7816 entspricht. Wie bei der oben beschriebenen Mini CD ist eine zentrale Bohrung 9 durch alle drei Schichten hindurch vorgesehen, deren Durchmesser d den Durchmesser der bekannten Mini CD entspricht.

Auf der der Rekorderfolie 3 abgewandten Seite 2a der ersten Schicht 2 ist an einer vorgegebenen Position, die nachfolgend anhand von Fig. 4 beschrieben wird, eine Ausnehmung 10 gebildet, in die ein Mikroprozessor-Chip 11 eingesetzt ist und beispielsweise durch Einkleben gesichert ist. Oberhalb des Mikroprozessor-Chips 11 ist eine Kontaktfläche 12 vorgesehen, die in der von der Smart Card bekannten Weise metallische Anschlüsse 12a, 12b, etc. für den Zugriff durch ein Lesegerät gebildet sind.

In Fig. 4 sind anhand des Umrisses einer bekannten Smart Card die durch die genannte Iso-Norm vorgegebenen Positionen der Kontakte der Kontaktflächen bezüglich der Längsseiten 5' und 6' und der Breitseiten 7' und 8' angegeben. Bezogen auf den Datenträger von Fig. 1 sind die Abstände zu der einen Querseite 7' bezüglich einer Tangente 7a an die gekrümmte Breitseite 7 des Datenträgers zu messen, welche die Verlängerung der Längsseiten 5, 6 unter einem rechten Winkel schneidet, was durch die gestrichelte Linie in Fig. 1 dargestellt ist.

Wie aus Fig. 2 ersichtlich ist, sind auf die der oberen Schicht 2 abgewandte Seite der Rekorderfolie 3 Daten D ausgehend von einem Abstand von der zentralen Bohrung 9 nach außen hin eingeschrieben.

Der oben beschriebene schichtweise Aufbau des Datenträgers hat eine Gesamtdicke von 0,75 mm, welches die maximale Dicke der nach der beschriebenen ISO-Norm vorgeschriebenen Dimension von Smart Cards ist.

Die Herstellung des Datenträgers erfolgt folgendermaßen. Zunächst wird die erste Schicht 2 aus gleichem oder ähnlichem Kunststoffmaterial hergestellt, aus dem auch die bisherigen Smart Cards gefertigt werden. Die Schicht 2 wird dabei in die im Zusammenhang mit Fig. 1 beschriebene Form zurechtgeschnitten bzw. gestanzt oder ähnliches. Damit hat die erste Schicht 2 eine ähnliche Form wie die bekannte Mini CD mit der Ausnahme, daß die Breite B geringer ist und der einer Smart Card entspricht. In diese erste Schicht 2 wird an der durch die Iso-Norm 7816 für die Smart Card vorgegebenen Stelle eine Vertiefung eingefräßt oder anderweitig angebracht, in die der Mikroprozessor-Chip 11 eingeklebt bzw. einlaminiert wird, derart, daß die normalerweise mit diesem bereits verbundene Kontaktfläche 12 nach außen orientiert ist. Die Anordnung der Kontaktflächen 12 des Mikroprozessor-Chips 11 entspricht dabei genau jener, die durch die Iso-Norm 7816 für die Smart Card vorgegeben ist.

Anschließend wird eine Kombination aus der transparenten Kunststoffschicht 4 und der darauf geklebten Rekorderfolie 3, die ebenfalls auf die in Fig. 1 gezeigten Abmessungen gebracht wurde, derart mit der Schicht 2 verklebt, daß die Rekorderfolie 3 der Schicht 2 zugewandt ist. Dann wird der Datenträger wie die bekannte Mini CD über einen CD-Brenner von der Seite der transparenten Kunststoffschicht 4 aus beschrieben. Ferner wird der in dem Mikroprozessor-Chip 11 enthaltene Datenspeicher beschrieben. Das Datenschreiben sowohl in den Chip als auch auf die Rekorderfolie 3 kann auch schon vor dem zusammenkleben des Datenträgers erfolgen. Durch den schichtweisen Aufbau wird die Rekorderfolie 3 zwischen den Schichten 2 und 4 geschützt.

Im Betrieb wird der Datenträger in einem CD-Laufwerk eines Personal Computers gelesen und/oder beschrieben, je nach dem, um welche Art von Rekorderfolie 3 es sich handelt und welchen Typs das Laufwerk ist. Andererseits kann der Datenträger auch in ein Smart Card-Lesegerät eingesetzt werden und die im Mikroprozessor-Chip gespeicherten Daten gelesen werden, bestimmte Rechenoperationen ausgeführt werden und/oder Daten neu eingeschrieben werden.

In einer in Fig. 5 dargestellten Weiterbildung weist der erfindungsgemäße Datenträger auf der Oberseite 2a der ersten Schicht 2 neben den Kontaktflächen 12 für den Mikroprozessor 11 Identifizierungseinrichtungen auf. Ein erstes Beispiel der Identifizierungseinrichtung ist ein Fingerabdrucksensor 20 zum Erfassen eines Fingerabdruckes, wobei der erfaßte Fingerabdruck mit einem in dem Mikroprozessor-Chip 11 oder in dem Smart Card-Lesegerät gespeicherten Fingerabdruck zu vergleichen ist. Eine weitere Identifizierungseinrichtung ist ein auf der Oberseite 2a der Schicht 2 vorgesehener Barcode 21, der z.B. spezielle Authentifizierungsinformationen beinhaltet. Als weiteres Beispiel einer Identifizierungseinrichtung ist ein auf die Oberseite 2a der Schicht 2 aufgebrachtes Foto 22 oder eine sonstige Beschriftung vorgesehen. Die beschriebenen Identifizierungseinrichtungen können entweder alleine oder in Kombination miteinander vorgesehen sein. Der Barcode 21 und/oder eventuelle Aufdrucke oder Fotos 22 sind fälschungssicher, beispielsweise durch ein Siebdruckverfahren aufgebracht oder einlaminiert. In einer Abwandlung kann auf der ersten Schicht 2 an der der Rekorderfolie 3 abgewandten Seite eine Papierfolie zur Aufnahme von Aufdrucken vorgesehen sein.

Im Betrieb wird die Information, die auf die Identifizierungseinrichtung 20 und/oder 21 und/oder 22 enthalten ist, durch das Lesegerät gelesen und mit vorgegebenen Daten, die beispielsweise in dem Mikroprozessor-Chip 11 gespeichert sind oder von dem Lesegerät von einem entfernten Host-Computer abgefragt werden, verglichen.

In einer Weiterbildung wird anstelle des Compact Disc-Teils des Datenträgers, der aus der Rekorderfolie 3 und der transparenten Kunststoffschicht 4 besteht, ein DVD-ROM- bzw. ein DVD-RW-Teil eingesetzt, wobei dann eine Erhöhung der Speicherkapazität von 40 mB auf ungefähr 4,0 Gigabytes möglich ist. In der DVD-RW-Ausführungsform können die gespeicherten Daten mehr als 1.000 mal überschrieben werden.

In einer weiteren erfindungsgemäßen Weiterentwicklung wird zusätzlich oder anstelle zu den bestehenden Kontaktflächen 12 des Mikroprozessor-Chips eine Antennenleiterbahn in die erste Schicht 2 einlaminiert. Hierbei kann die Schicht 2 in mehrere Schichten unterteilt sein. Dadurch wird der Datenträger zu einer kontaktlosen Kombi-Smart-CD.

Es sei darauf hingewiesen, daß die Erfindung nicht auf die oben angegebenen, durch die aktuelle ISO-Norm beschriebenen Abmessungen des Datenträgers beschränkt ist, sondern auch eventuell aufgrund einer Normänderungen geänderte Abmessungen umfaßt.

Nachfolgend wird ein spezielles Ausführungsbeispiel der Anwendung des erfindungsgemäßen Datenträgers in Form einer Patientenkarte beschrieben. Auf dem Mikroprozessor-Chip 11 sind die Basisdaten eines Patienten wie Name, Geburtsdatum, etc. gespeichert, ebenso wie eine Verbindung zu einem zentralen Computer, der beispielsweise als Zentralcomputer für Gesundheitswesen für jedes Land oder - in Zukunft - für alle Länder weltweit gemeinsam vorgesehen ist. Auf diesem Zentralcomputer sind die medizinischen Informationen über einen Patienten, z.B. die Krankengeschichte, etwaige Behandlungen, Blutgruppe etc. in einer Patientendatei abgelegt. Ebenso sind auf dem CD-Teil, d.h. auf der Rekorderfolie 3, die Basisdaten des Patienten gespeichert, sowie Zugangssoftware zu dem zentralen Computer, die beim Einlegen des Datenträgers in ein CD-ROM- oder DVD-Laufwerk eines Personal Computers aktiviert wird und über das Internet einen Zugang zu dem zentralen Rechner herstellt. Ferner erhält der Patient eine Identifikationsnummer.

Im Betrieb legt der Patient seine Patientenkarte bei einem Arztbesuch in das Smart Card-Lesegerätes des Arztes ein und gibt seine persönliche Idenfikationsnummer ein. Anschließend aktiviert der Datenträger die Verbindung zum Zentralcomputer, wo die persönlichen Gesundheitsdaten gespeichert sind. Somit ist der Arzt sofort über alle gesundheitsrelevanten Informationen des Patienten informiert. Daten auf dem Zentralcomputer können nur mit entsprechender Zugangsberechtigung des Arztes verändert werden.

Die Patientenkarte ist beispielsweise auch als Apothekenkarte verwendbar. In diesem Ausführungsbeispiel einer Anwendung sind in dem zentralen Computer unter der zentralen Patientendatei Informationen über die von dem Patienten einzunehmenden bzw. auch verschriebenen Medikamente gespeichert. Der Rechner des Apothekers erfaßt die Medikamentenausgabe und regelt den Vorgang der Lagerhaltung/Nachbestellung und Abrechnung mit der Krankenkasse.

In einer Abwandlung enthält die Patientenkarte zusätzlich einen Fingerabdrucksensor. Im Betrieb wird der Zugang zum zentralen Computer und zur Patientenakte dadurch hergestellt, daß der Patient seinen Daumen auf den Sensor legt, und der Sensor den Fingerabdruck erfaßt und mit einem in dem Mikroprozessor-Chip gespeicherten Fingerabdruck vergleicht. Alternativ enthält die Patientenkarte einen in dem Mikroprozessor-Chip gespeicherten digitalen Fingerabdruck, der mit einem Fingerabdruck, der über einen an dem Smart Card-Lesegerät eingegebenen Fingerabdruck verglichen wird.

Die erfindungsgemäße Patientenkarte kann für den Abruf von Patientendaten von einem Zentralcomputer unabhängig von dem verwendeten System, wie Personal Computer mit Anbindung an das Internet oder Smart Card-Lesegerät eingesetzt werden. So ist es beispielsweise möglich, wenn ein Patient außerhalb seines Heimatlandes einen Unfall erleidet, daß die Unfallärzte die Patientenkarte verwenden und entweder über das Smart Card-Lesegerät des in dem jeweiligen Land verwendeten Systems, falls dies mit dem im Heimatland verwendeten System übereinstimmt, die Karte lesen und so Zugriff auf die Patientendaten haben oder auf die in dem Zentralcomputer gespeicherte Patientenkartei über den CD-Teil des Datenträgers, der in einem Personal Computer verwendet wird, zugreifen können. Hierzu kann vorgesehen sein, daß der jeweilige Anwender, in diesem Fall der Unfall-Mediziner, nach einer Identifikationsnummer gefragt wird, beispielsweise einer achtstelligen AMA ID-Nummer. Nachdem der Authorisierungsvorgang abgeschlossen ist, erhalten die Unfall-Ärzte Zugang zur zentralen Patientendatei bzw. -akte des Patienten.

Die Anwendungsbereiche des Datenträgers sind nicht auf Patientenkarten beschränkt. Der Datenträger kann insbesondere im Banken- und Kreditkartenwesen Anwendung finden, aber auch für alle Arten von Handelsfirmen und Produktherstellern, da die einzigartige Kombination zwischen einer CD mit großer Speicherkapazität und einem Mikrochip mit großer Rechenleistung gegenüber dem Stand der Technik außergewöhnlich ist. Weitere Anwendungsgebiete sind Personalausweise, Sozialversicherungsausweise und spezielle Ausweise für bestimmte Fachberufe.

In der in den Figuren 11 bis 14 dargestellten weiteren Ausführungsform der Erfindung ist der Datenträger 300 zweiteilig durch zwei drehbar miteinander verbundene Elemente 320 und 340 ausgebildet. Das den Mikroprozessorchip beinhaltende erste Element 320 weist die Abmessungen der die Smartcard bildenden Schicht 2 des Ausführungsbeispiels nach Fig. 3 auf. Das zweite Element 340 ist als Mini-CD mit den Abmessungen der Mini-CD der Schichten 3 und 4 des Ausführungsbeispiels gemäß Fig. 3 ausgebildet. Die zwei Elemente 320 und 340 sind über eine nahe einer Ecke gegenüberliegend zu dem Mikroprozessorchip 11 vorgesehene Nietverbindung 350 drehbar miteinander verbunden, so daß das eine Element gegen das andere Element schwenkbar ist. Die Elemente 320 und 340 sind dabei derart relativ zueinander angeordnet, daß der Mikroprozessorchip auf dem ersten Element 320 und die beschriebene Seite der Mini-CD des zweiten Elements 340 auf den einander abgewandten Außenseiten liegen. Auf der dem zweiten Element 340 zugewandten Seite des ersten Elements 320 kann ein Barcode 360 oder ein Magnetstreifen 361, wie in Fig 14 dargestellt ist, vorgesehen sein.

Die Herstellung des Datenträgers nach dieser Ausführungsform erfolgt so, daß auf ein Zusammenkleben der Schichten 2 und 3, 4, was bei der ersten Ausführungsform erfolgt, verzichtet wird, aber die Formausprägung der originalen Schichten (Hoehe x Breite x Staerke)wie beibehalten wird. An Stelle des vollflächigen Verklebens der beiden Schichten wird an definierter Stelle im rechten oberen Eck beider Karten eine Bohrung angebracht und anschliessend beide Karten durch einen unzerbrechlichen Kunststoffniet, eingebracht in die Bohnung, verbunden. Insofern liegen hier zwei Datenträger entsprechend den Abmessungen gem. Fig. 6 vor. Legt man diese beiden Datenträger passgenau aufeinander, so entspricht der obere analog der Smartcard 2 in Fig. 3 und der andere, untere, der Mini-CD 3, 4 der Fig. 3. Durch den Kunststoffniet sind nun beide Schichten einerseits verbunden, aber beweglich und lassen sich wie ueber ein Scharnier bei einem Taschenmesser- prinzip aufklappen bzw. aufschwenken. Dadurch gewinnt man eine flexible Doppelkarte, die einerseits in jedem CD Laufwerk lesbar ist (in eingeklapptem Zustand) aber andererseits auch in allen smart Card Lesegeräten gelesen werden kann, die an sonsten die bisher dargestellten Ausfuehrungsformen nicht erkennen.

Im Betrieb kann der Datenträger gemäß Fig. 11 in eingeklapptem Zustand in jedem CD-Laufwerk gelesen werden. In dem in Fig. 12 gezeigten voll ausgeklappten Zustand kann der Datenträger mit seinem ersten, die Smartcard bildenden Element 320 leicht in jedes Smartcard Lesegerät eingeführt werden und dabei mit dem zweiten, die Mini-CD bildenden Element 340 ergriffen werden. In dem voll ausgeklappten Zustand gemäß Fig. 14 kann ferner ein auf der Unterseite des Smartcard Elements 320 vorgesehener Barcode oder Magnetstreifen in einem dafür geeigneten Gerät gelesen werden.

Die Ausführungsform, die eine flexible Kombikarte bildet, ist einfach in der Handhabung. Sie kann in einem Etui aus unzerbrechlichem Kunststoff transportiert werden. Sie weist den besonderen Vorteil auf, daß sie auch anwendbar ist, wenn Smartcard-Lesegeräte der älteren Generation zur Verfügung stehen, bei denen die Ausführungsform nach Fig. 3 unter Umständen auf Grund der Dicke der Karte nicht gelesen werden kann.

Bei der beschriebenen Ausführungsform können auch die in Fig. 5 Abwandlungen, die in Zusammenhang mit der ersten Ausführungsform beschrieben wurden, vorgesehen sein.

Eine Weiterentwicklung des CD-Gesundheits- kartenysstems verbunden mit zentraler oder teil-dezentralisierten Serverstrukturen wird ferner dem zunehmenden Bedürfnis nach Datensicherheit gerecht.

Kern der Forderung der Datenschuetzer ist, dass alle gesundheitsrelevanten Daten einerseits nur der Hoheit des Patienten unterliegen dürfen und dass andererseits niemand ohne Erlaubnis des Patienten diese Daten einsehen darf.

Bei der zentralen Speicherung von Patientenakten tauchen somit zwei Problemebenen auf, auf denen eine Gefährdung der Datenvertraulichkeit gegeben sein könnte. Dies ist einerseits der Bereich der Übermittlung der Daten durch Datenleitungen und andererseits die Ebene der zentralen Datenspeicherung selber, auch Hosting der Daten gennant. Darunter versteht man die zentralen Servercomputer, in denen Patientenakten zentral gespeichert werden und auf Abruf warten.

Die Weiterentwicklung sieht vor, dass die Patientendaten bereits am Ort der Dateneingabe, nämlich der Arztpraxis wo die Originalakte zusammen gestellt wird, verschlüsselt bzw. encryptet werden. Deshalb werden nur enkryptete Signale über die Datenleitungen verschickt und gleichzeitig auch nur enkryptete Datensammlungen im zentralen Hostingserver gespeichert. Diese sind für den Host unlesbar.

Werden die Daten durch den Patienten oder einen autorisierten Arzt abgerufen, so werden die enkrypteten Daten wieder in verschlüsseltem Zustand über eine Datenleitung in der Computer des Patienten oder des behandelnden Arztes transportiert und dort wieder decryptet, d.h. lesbar gemacht.

Die Realisierung ist dergestalt, dass die Patienten CD die kompletter De-und Entcryptungssoftware enthält, unabhängig von anderen darauf gespeicherten Daten. Nach Fertigstellung der Neudiagnose wird mittels dieser Encryptungs-software der komplette Dateninhalt entsprechend dem vom Patienten vorgegebenen Passwort verschusselt und die encrypteten Daten in den genau definierten Ordner des Patienten in der Zentraldatei hoch geladen. Zum Entschlüsseln geht man umgekehrt vor, verwendet entweder die Decryptungssoftware auf der CD oder eine Kopie der Software, die schon auf dem jeweiligen Arztcomputer gespeichert ist. Der Patient gibt sein Passwort ein, das er auch jedes Mal ändern kann und anschließend wird die Patientenakte verschlüsselt hoch geladen. Der Vorgang lässt sich sehr schnell abwickeln. Man benötigt hierzu lediglich eine geschützte Tastatur auf der Empfangstheke der Arztrezeption. Unterbrochen wird dieses System einzig durch das eingebaute Notfall-Programm, das ebenfalls auf der CD bzw. DVD gespeichert wird, sofern der Patient dies wünscht. In diesem Fall erfolgt die Entschlüsselung der gespeicherten Patientendaten automatisch nachdem ein autorisierter Mediziner durch eine online Verifizierung seiner Health Professional Card seine Zugangsberechtigung zu den Daten dokumentiert. Die vom Patienten eingegebene PIN Nummer zur Entschlüsselung wird dabei "überschrieben" durch die Notfall-PIN-Nummer des Mediziners.

Diese Weiterentwicklung ist bei allen oben beschriebenen Ausführungsformen anwendbar.

## Patentansprüche

1. Datenträger zum Speichern und Verarbeiten von digitalen Daten
mit einer optoelektronischen Speicherplatte (2, 3, 4), die in einem herkömmlichen optoelektronischen Laufwerk lesbar ist und einem auf einer Oberfläche (2a) der optoelektronischen Speicherplatte vorgesehenen Mikroprozessor (11), **dadurch gekennzeichnet,**
**daß** die optoelektronische Speicherplatte (2, 3, 4) im wesentlichen rechteckig ausgebildet ist, wobei die Breite (B) des Rechtecks der Breite einer in einem Smart Card-Lesegerät lesbaren Smart Card nach ISO-Norm entspricht.

2. Datenträger nach Anspruch 1, **dadurch gekennzeichnet, daß** eine Kontaktfläche zum Kontaktieren des Mikroprozessors (11) auf der optoelektronischen Speicherplatte an einer Position vorgesehen ist, die der Position einer Kontaktfläche eines Mikroprozessors auf einer Smart Card nach ISO-Norm für Smart Cards entspricht.

3. Datenträger nach Anspruch 1 oder 2, **dadurch gekennzeichnet, daß** der Mikroprozessor (11) auf der die Daten tragenden Oberfläche abgewandten Seite (2a) der optoelektronischen Speicherplatte vorgesehen ist.

4. Datenträger nach einem der Ansprüche 1 bis 3, **dadurch gekennzeichnet, daß** der Datenträger aus wenigstens drei miteinander verbundenen Schichten (2, 3, 4) besteht, die eine Rekorderschicht (3), eine daran angrenzende transparente Schicht (4), sowie eine Kunststoffschicht (2) auf der der transparenten Schicht abgewandten Seite der Rekorderschicht umfassen, wobei der Mikroprozessor (11) in der Kunststoffschicht (2) vorgesehen ist.

5. Datenträger nach Anspruch 4, **dadurch gekennzeichnet, daß** der Mikroprozessor (11) in eine in der Kunststoffschicht (2) vorgesehene Ausnehmung (10) eingeklebt ist.

6. Datenträger nach einem der Ansprüche 1 bis 5, **dadurch gekennzeichnet, daß** eine Identifizierungseinrichtung vorgesehen ist.

7. Datenträger nach Anspruch 6, **dadurch gekennzeichnet, daß** die Identifizierungseinrichtung eine Fingerabdruckerkennungsvorrichtung (20) aufweist.

8. Datenträger nach Anspruch 6 oder 7, **dadurch gekennzeichnet, daß** die Identifizierungseinrichtung einen Barcode (21) aufweist.

9. Datenträger nach einem der Ansprüche 1 bis 8, **dadurch gekennzeichnet, daß** die optoelektronische Speicherplatte eine Compact Disc (CD) oder eine DVD-Platte ist, die nur lesbar oder lesbar und wiederbeschreibbar ist.

10. Datenträger nach einem der Ansprüche 1 bis 9, **dadurch gekennzeichnet, daß** die Dicke des Datenträgers der Dicke einer Smart Card entspricht und/oder daß die Länge (L) des Rechtecks des Datenträgers der Länge einer herkömmlichen Mini CD entspricht und/oder daß die Schmalseiten (7, 8) des Datenträgers kreisbogenförmig ausgebildet sind.

11. Datenträger nach einem der Ansprüche 1 bis 10, **dadurch gekennzeichnet, daß** der Mikroprozessor (11) einen elektronischen Datenspeicher beinhaltet.

12. Datenträger nach einem der Ansprüche 1 bis 11, **dadurch gekennzeichnet, daß** der Mikroprozessor über eine Kontaktfläche (12) mit einem Smart Card-Lesegerät verbindbar ist.

13. Datenträger nach einem der Ansprüche 1 bis 11, **dadurch gekennzeichnet, daß** der Mikroprozessor auf kontaktlose Weise mit einem Smart Card-Lesegerät verbindbar ist.

14. Patientenkarte, bestehend aus einem Datenträger nach einem der Ansprüche 1 bis 13.

15. Patientenkarte nach Anspruch 14, **dadurch gekennzeichnet, daß** auf der optoelektronischen Speicherplatte (3, 4) ein Programm abgespeichert ist, das nach Einlegen der Speicherplatte in ein optoelektronisches Laufwerk über den dieses Laufwerk ansprechenden Host Computer eine Verbindung mit einem Zentralrechner für Gesundheitswesen über das Internet herstellt.

16. Patientenkarte nach Anspruch 14 oder 15, **dadurch gekennzeichnet, daß** auf dem Mikroprozessorchip (11) ein Programm abgespeichert ist, über das beim Einlegen der Speicherplatte in ein Smart Card-Lesegerät eine Verbindung mit einem zentralcomputer für Gesundheitswesen über ein Netzwerk hergestellt wird.

17. Herstellungsverfahren für einen Datenträger nach einem der Ansprüche 1 bis 13 mit den Schritten
a) Bereitstellen einer Kunststoffkarte (2) mit den Abmessungen einer Smart Card nach ISO-Norm;
b) Versehen der Kunststoffkarte mit einem Mittel zum Ineingriffbringen mit einer Halterung eines optoelektronischen Laufwerks;
c) Einbringen eines Mikroprozessorchips (11) in eine Vertiefung der Kunststoffkarte;
d) Aufbringen der Kontakte (12) für den Mikroprozessorchip (11) an einer durch die ISO-Norm für Smart Cards vorgegebenen Stelle; und
entweder nach dem Schritt b) oder nach dem Schritt c) oder nach dem Schritt d) Verbinden der Kunststoffkarte (2) mit einer optoelektronischen Speicherplatte (3, 4), die dieselben Abmessungen in Längs- und Querrichtung wie die Kunststoffkarte (2) aufweist.

18. Verfahren nach Anspruch 17, **dadurch gekennzeichnet, daß** die Schmalseiten der Kunststoffkarte (2) kreisbogenfömig abgerundet werden.

19. Verfahren nach Anspruch 17 oder 18, **dadurch gekennzeichnet, daß** das Verbinden mittels Verkleben erfolgt.

20. Datenträger zum Speichern und Verarbeiten von digitalen Daten
mit einer optoelektronischen Speicherplatte (340), die in einem herkömmlichen optoelektronischen Laufwerk lesbar ist und einer Smartcard (320) mit einem auf deren Oberfläche vorgesehenen Mikroprozessor (11), wobei die optoelektronische Speicherplatte (340) dieselben Abmessungen wie die Smartcard (320) aufweist und wobei die optoelektronische Speicherplatte (340) und die Smartcard (320) an einer Stelle drehbar miteinander verbunden sind.

21. Datenträger nach Anspruch 20, **dadurch gekennzeichnet, daß** der Mikroprozessor (11) und die die datentragende Oberfläche der optoelektronischen Speicherplatte (340) auf den einander abgewandten Seiten angeordnet sind.

22. Patientenkarte bestehend aus einem Datenträger nach Anspruch 20 oder 21.

23. Datenträger oder Patientenkarte nach einem der vorhergehenden Ansprüche, **dadurch gekennzeichnet, daß** auf dem datenträger bzw. der Patientenkarte eine De- und/oder Encryptungseinrichtung, bevorzugt ein Programm vorgesehen ist.
